Europäisches Patentamt

European Patent Office

Office européen des brevets

(11) Veröffentlichungsnummer: **0 368 024**

**A2**

(12) **EUROPÄISCHE PATENTANMELDUNG**

(21) Anmeldenummer: **89118998.7**

(22) Anmeldetag: **12.10.89**

(51) Int. Cl.5: **F16L 39/04**

(30) Priorität: **11.11.88 DE 3838303**

(43) Veröffentlichungstag der Anmeldung:
**16.05.90 Patentblatt  90/20**

(84) Benannte Vertragsstaaten:
**AT CH ES FR GB IT LI SE**

(71) Anmelder: **Ott Maschinentechnik GmbH**
**Jägerstrasse 4-12**
**D-8960 Kempten(DE)**

(72) Erfinder: **Heel, Helmut**
**Andreas-Mayer-Strasse 82 1/8**
**D-8951 Lengenwang(DE)**
Erfinder: **Bauch, Karl, Dipl.-Ing.**
**Karlstrasse 12**
**D-8960 Kempten(DE)**
Erfinder: **Reisacher, Bartholomäus, Dipl.-Ing.**
**Remmelsberg 12**
**Untrasried(DE)**
Erfinder: **Wörner, Stefan, Dipl.-Ing.**
**Schumacherring 86**
**D-8960 Kempten(DE)**

(74) Vertreter: **Liebau, Gerhard, Dipl.-Ing.**
**Birkenstrasse 39 Postfach 22 02 29**
**D-8900 Augsburg 22(DE)**

(54) **Drehdurchführung für zwei unterschiedliche Fluide.**

(57) Die Drehdurchführung für zwei unterschiedliche Fluide weist eine in einem feststehenden Gehäuse (1) drehbar gelagerte Hohlwelle (2), mit zwei getrennten, axialen Durchflußkanälen (4, 5) auf. Zwischen der Hohlwelle (2) und zwei im Gehäuse (1) vorgesehenen, getrennten Zuflußkanälen (9, 17) für die beiden Fluide, ist eine Gleitringdichtungsanordnung vorhanden. Diese umfaßt einen mit der Mohlwelle (2) stirnseitig verbundenen gemeinsamen Gleitring (8),der eine zentrale Bohrung (8a) und mehrere, konzentrisch hierzu angeordnete, axiale Durchlässe (8b) aufweist, sowie im Gehäuse (1) einen zentralen Gleitring (11) und einen diesen konzentrisch umgebenden Gleitring (14). Der konzentrische Gleitring (14) weist mehrere, auf einem zur Drehachse (A) konzentrischen Kreis angeordnete axiale Durchlässe (14a) auf, die mit dem Zuflußkanal (17) für das zweite Fluid verbunden sind. Zwischen dem äußeren Umfang des zentralen Gleitringes (11) und dem inneren Umfang des konzentrischen Gleitringes (14) ist ein bis zu der Gleitfläche (8c) des gemeinsamen Gleitringes (8) reichender Ringraum (18) vorgesehen, der mit einem im Gehäuse (1) vorgesehenen Zuflußkanal (23) und einem Abflußkanal (24) verbunden ist.

## Drehdurchführung für zwei unterschiedliche Fluide.

Die Erfindung betrifft eine Drehdurchführung für zwei unterschiedliche Fluide, insbesondere für Werkzeugmaschinen, mit einem feststehenden Gehäuse, einer darin drehbar gelagerten, einen zentralen Durchflußkanal für das erste Fluid und mindestens einen hierzu parallelen zweiten Durchflußkanal für das zweite Fluid aufweisenden Hohlwelle, mit zwei im Gehäuse vorgesehenen, getrennten Zuflußkanälen für die beiden Fluide und mit einer zwischen diesen und der Hohlwelle vorgesehenen, koaxial zur Drehachse angeordneten Gleitringdichtungsanordnung, über welche die Fluide den Durchgangskanälen getrennt zuführbar sind, wobei die Gleitringdichtungsanordnung einen mit dem inneren Ende der Hohlwelle stirnseitig verbundenen, für die Durchleitung beider Fluide gemeinsamen Gleitring, der eine zentrale Bohrung und mehrere, auf einem zur Drehachse konzentrischen Kreis angeordnete, axiale Durchlässe aufweist, und in dem Gehäuse einen zentralen Gleitring, sowie einen diesen konzentrisch umgebenden Gleitring umfaßt, die je in im Gehäuse in zugeordneten Zylinderräumen axial verschiebbaren, drehfest gehaltenen, kolbenartig ausgebildeten, zueinander konzentrischen Gleitringträgern gehalten sind und unabhängig voneinander unter Federdruck, sowie dem Druck des jeweiligen Fluids axial an die Gleitfläche des gemeinsamen Gleitringes andrückbar sind.

Bei Werkzeugmaschinenspindeln ist häufig im Innern der hohlen Werkzeugmaschinenspindel eine Spanneinrichtung (Werkzeugspanner) vorgesehen. Diese Spanneinrichtung weist eine koaxial zur Spindelachse verlaufende Zugstange auf, deren vorderes Ende im Bereich der Werkzeugaufnahme mit einer am werkzeug angreifenden Spannzange versehen ist. Das hintere Ende der Zugstange ist durch eine hydraulisch arbeitende, sogenannte Löseeinheit hindurchgeführt, die zur Betätigung der Spanneinrichtung dient. Damit dem Werkzeug ein Kühlschmiermittel zugeführt werden kann, ist die Zugstange hohl ausgebildet und ihr aus der Löseeinheit herausragendes Ende steht mit dem zentralen Durchflußkanal der Hohlwelle in Verbindung. Die Drehdurchführung erlaubt somit die Zuführung des Kühlschmiermittels von dem stillstehenden Gehäuse zu der rotierenden Zugstange. Beim Werkzeugwechsel, d.h. beim Stillstand der Werkzeugmaschinensoindel, kann anstelle von Kühlschmiermittel Luft zum Ausblasen der Werkzeugauf nahme durch die Drehdurchführung und die Zugstange geleitet werden. Über den zweiten Zuflußkanal, die Gleitringdichtungsanordnung und den parallelen zweiten Durchflußkanal kann während des Stillstandes der Werkzeugmaschinenspindel der Löseeinheit Hydrauliköl unter hohem Druck zugeführt werden, wodurch die Löseeinheit die Zugstange in der Werkzeugmaschinensoindel verschiebt und die Spannzange das Werkstück freigibt.

Drehdurchführungen für zwei unterschiedliche Fluide sind in den verschiedensten Ausführungen und für die verschiedensten Zwecke bekannt. Eine Drehdurchführung der eingangs beschriebenen Art, wie sie für den beschriebenen Zweck in Kombination mit Werkzeugmaschinenspindeln verwendet werden könnte, ist beispielsweise in dem Katalog 869 D "DEUBLIN ROTATING UNIONS" der Firma Deublin-Vertriebs-GmbH, D-6238 Hofheim-Wallau, Seite 36, gezeigt und beschrieben. Diese Drehdurchführung weist bei dem beschriebenen Einsatzzweck für Werkzeugmaschinenspindeln verschiedene Nachteile auf. Sie ist nur für eine maximale Drehzahl von 1.500 U/min geeignet. Bei Werkzeugmaschinenspindeln werden heutzutage jedoch maximale Drehzahlen von 30.000 U/min und darüber gefordert. wenn sich Naß- und Trockenbearbeitung miteinander abwechseln, dann ist das Ausblasen des Kühlschmiermit tels aus der Drehdurchführung und der Zugstange bei jedem Werkzeugwechsel äußerst störend. Die trocken zu haltenden Werkstücke oder Meßwerkzeuge werden nämlich dabei mit Kühlschmiermittel benetzt. Außerdem wird der Bedienungsmann durch die Flüssigkeitsnebel belästigt. Hierbei ist zu berücksichtigen, daß auch bei fortdauernder Trockenbearbeitung, bei der dem Werkzeug kein Kühlschmiermittel zugeführt werden soll, trotzdem in der Drehdurchführung Kühlschmiermittel vorhanden sein muß, damit der zentrale Gleitring geschmiert und die Reibungswärme abgeführt wird. Fehlt das Kühlschmiermittel an der Gleitringdichtung, dann wird, insbesondere bei höheren Spindeldrehzahlen, die Gleitringdichtung rasch zerstört. Es muß also auch bei der Trockenbearbeitung nach jedem Werkzeugwechsel nach dem Ausblasen der Werkzeugaufnahme der Drehdurchführung wieder Kühlschmiermittel zugeführt werden. Damit dieses Kühlschmiermittel während der Trockenbearbeitung nicht zum werkzeug gelangt, ist in der Zugstange oder der Hohlwelle ein federbelastetes Sperrventil eingebaut, welches während der Trockenbearbeitung, bei der Drehdurchführung das Kühlschmiermittel unter geringem Druck zugeführt wird, den Durchflußkanal in der Hohlwelle bzw. der hohlen Zugstange absperrt. Dieses Rückschlagventil gibt jedoch zu weiteren Problemen Anlaß, denn es behindert u.a. auch den Durchfluß des Kühlschmiermittels während der Naßbearbeitung. Weiterhin wird der zentrale Gleitring auch bei Verwendung eines Rückschlagventiles nur ungenügend gekühlt, denn es ist keine Zwangsumwälzung des Kühlschmiermittels vorgesehen. Auch aus diesem Grund ist die bekannte Drehdurchführung nicht für höhere Spindeldrehzahlen geeignet. Ferner grenzt nur der zentrale Gleitring das ihn zentral durchströmende Kühlschmiermittel von dem ihn umgebenden Hydrauliköl ab. Damit beide Fluide nicht miteinander vermischt werden, muß auf den inneren Gleitringträger eine verhältnismäßig starke Druckfeder als Grundbelastung einwirken. Diese höhere Grundbelastung führt dann auch bei Trockenbearbeitung zu einer unnötig starken Anpressung des zentralen Gleitringes an den gemeinsamen Gleitring, was mit entsprechender Wärmeentwicklung und Verschleiß verbunden ist. Schließlich kann bei Trockenbearbeitung wegen der notwendigen Kühlung und Schmierung des zentralen Gleitringes durch das Kühlschmiermittel nicht unter Zuführung von Druckluft gearbeitet werden. Eine derartige Druckluftzufuhr ist jedoch manchmal erwünscht, um das Werkzeug und das Werkstück zu kühlen und Späne zu entfernen.

Der Erfindung liegt daher die Aufgabe zugrunde, eine Drehdurchführung für zwei unterschiedliche Fluide, insbesondere für Werkzeugmaschinenspindeln, der eingangs erwähnten Art zu schaffen, die unter Vermeidung obiger Nachteile insbesondere für sehr hohe Drehzahlen geeignet ist, bei der der Durchfluß durch den zentralen Durchflußkanal unbehindert erfolgen kann und die auch bei hohen Drehzahlen eine Trockenbearbeitung, gegebenenfalls unter Zufuhr von Druckluft, ermöglicht.

Dies wird nach der Erfindung dadurch erreicht, daß der konzentrische Gleitring mehrere, auf einem zur Drehachse konzentrischen Kreis angeordnete, axiale Durchlässe aufweist, die über den Zylinderraum des den konzentrischen Gleitring tragenden äußeren Gleitringträgers mit dem Zuflußkanal für das zweite Fluid verbunden sind, daß der gemeinsame Gleitring und/oder der konzentrische Gleitring im Bereich der axialen Durchlässe in der jeweiligen Gleitfläche mit einer die Durchlässe untereinander verbindenden Ringnut versehen ist, daß zwischen dem äußeren Umfang des zentralen Gleitringes und dem inneren Umfang des konzentrischen Gleitringes ein bis zu der Gleitfläche des gemeinsamen Gleitringes reichender Ringraum vorgesehen ist, daß der äußere Gleitringträger einen in einem dritten Zylinderraum des Gehäuses verschiebbaren Ringkolben aufweist, daß der Ringraum mit dem dritten Zylinderraum verbunden ist und daß in dem Gehäuse ein dritter Zuflußkanal und ein Abflußkanal vorgesehen sind, die mit dem dritten Zylinderraum verbunden sind.

Diese neue Drehdurchführung ist für besonders hohe Drehzahlen geeignet. Hierzu trägt insbesondere der zwischen dem speziell ausgebildeten konzentrischen Gleitring und dem zentralen Gleitring vorgesehene Ringraum bei. Über den dritten Zuflußkanal kann diesem dritten Ringraum ständig Kühlschmiermittel oder ein anderes geeignetes Fluid, welches neben wärmeabführenden Eigenschaften auch schmierende Eigenschaften aufweist, zugeführt werden. Dieses Kühlschmiermittel kühlt, da es unmittelbar an den inneren Umfang des konzentrischen Gleitringes, die Gleitfläche des gemeinsamen Gleitringes und teilweise auch an den zentralen Gleitring bzw. in dessen unmittelbare Nähe gelangt, alle drei Gleitringe in hervorragendem Maß. Entscheidend hierbei ist, daß das erwärmte Kühlschmiermittel durch den Abflußkanal wieder aus dem Gehäuse austreten kann. Es wird also eine ständige Umwälzung des Kühlschmiermittels und damit eine fortwährende wärmeabfuhr von den Gleitringen gewährleistet. Außerdem führt das Kühlschmiermittel zu einer Schmierung der Gleitflächen. Durch den zentralen Zuflußkanal und den zentralen Durchflußkanal kann in herkömmlicher Weise bei Naßbearbeitung ein Kühlschmiermittel zu dem Werkzeug hindurchgeleitet werden. Es kann aber genauso gut trocken ohne dieses Kühlschmiermittel gearbeitet werden, oder anstelle von Kühlschmiermittel durch den zentralen Zuflußkanal und den zentralen Durchflußkanal Druckluft geleitet werden. Ein Rückschlagventil in der Zugstange bzw. der Hohlwelle ist nicht mehr erforderlich. Damit wird die Durchflußleistung von Kühlschmiermittel bzw. auch Druckluft wesentlich erhöht und es werden sonstige, durch das Rückschlagventil bedingte Probleme vermieden. Weiterhin erfolgt der Durchlaß des ersten und des zweiten Fluids in zwei durch den Ringraum völlig voneinander getrennten Gleitringen. Sollte an einem der Gleitringe eine Lekage auftreten, so wird das austretende Fluid über den Ringraum abgeführt und kann sich nicht mit dem anderen Fluid vermischen. Infolgedessen ist es möglich, die Andruckfedern für die beiden Gleitringträger verhältnismäßig schwach auszubilden. Dies führt wiederum zu einer geringen Grundbelastung der Gleitringe und zu einer geringeren Erwärmung sowie einem geringeren Verschleiß derselben, solange die Fluide während der Rotation nicht mit hohem Druck zugeführt werden. Außerdem ist es möglich, durch das dem Ringraum zugeführte Kühlschmiermittel auch den Anpreßdruck des konzentrischen Gleitringes an den gemeinsamen Gleitring zu steuern, da die dem konzentrischen Gleitring abgewandte Ringkolbenfläche des Ringkolbens mit dem Druck des zur Kühlung vorgesehenen Kühlschmiermittels beaufschlagbar ist. Man kann infolgedessen auf bestimmte Betriebszustände, wie z.B. starkes Vibrieren, reagieren. Außerdem ist es möglich, den konzentrischen Gleitring nur mit geringer Grundbelastung an dem gemeinsamen Gleitring anzudrücken und dann, wenn während des Stillstandes der Werkzeugmaschinenspindel Hydrauliköl dem zweiten Durchflußkanal zugeführt werden soll, den Anpreßdruck durch Kühlschmiermittel zusätzlich zu
verstärken. Besonders vorteilhaft ist es auch, daß
während der Trockenbearbeitung, z.B. beim Fräsen
von Kunststoff, dem Werkzeug auch bei hohen
Drehzahlen Druckluft zugeführt werden kann.

Weitere vorteilhafte Ausgestaltungen der Erfindung sind in den Unteransprüchen gekennzeichnet.
Die Erfindung ist in folgendem, anhand von in der
Zeichnung dargestellten Ausführungsbeispielen näher erläutert. Es zeigen:

Figur 1 einen Axialschnitt eines ersten Ausführungsbeispieles der Drehdurchführung mit aerostatischen Lagern,

Figur 2 einen Axialschnitt eines zweiten Ausführungsbeispieles der Drehdurchführung mit
Wälzlagern,

Figur 3 einen Querschnitt nach der Linie III-
III der Figur 2.

In einem feststehenden Gehäuse 1 ist die
Hohlwelle 2 mittels des aerostatischen Radiallagers
3 und des aerostatischen Axiallagers 3a drehbar
gelagert. Die aerostatische Lagerung ist besonders
für hohe Drehzahlen von 30.000 bis 60.000 U/min
geeignet. Die Hohlwelle 2 weist einen zentralen
Durchflußkanal 4 auf, in dessen erweiterten Teil 4a
die nicht dargestellte Zugstange einer ebenfalls
nicht dargestellten, in einer Werkzeugmaschinenspindel angeordneten Spanneinrichtung eingreifen
kann. Die Hohlwelle weist parallel zu dem zentralen
Durchflußkanal 4 vorzugsweise drei gleichmäßig
über ihren Querschnitt verteilte Durchflußkanäle 5
auf. Das äußere Ende 2b der Mohlwelle 2 kann mit
der sogenannten Löseeinheit der Spanneinrichtung
verbunden sein, wobei dieser Löseeinheit über die
Durchflußkanäle 5 Hydrauliköl unter hohem Druck
während des Stillstandes der Werkzeugmaschinenspindel zugeführt werden soll.

An dem inneren Ende 2a der Hohlwelle 2,
welches bei dem gezeigten Ausführungsbeispiel
durch einen Teil des aerostatischen Axiallagers gebildet wird, ist stirnseitig ein für die Durchflußkanäle 4 und 5 gemeinsamer Gleitring 8 angeordnet.
Dieser Gleitring ist fest mit dem Ende 2a in der
weiter unten noch näher beschriebenen Art verbunden.

Der gemeinsame Gleitring 8 weist eine zentrale, mit dem Durchflußkanal 4 fluchtende Bohrung
8a und mehrere, auf einem zur Drehachse A konzentrischen Kreis angeordnete axiale Durchlässe
8b auf. Diese Durchlässe 8b stehen über den Ringkanal 6 mit den Durchflußkanälen 5 in Verbindung,
soweit sie nicht überhaupt mit diesen fluchten. Der
gemeinsame Gleitring 8 weist ferner in seiner in
einer Radialebene verlaufenden Gleitfläche 8c im
Bereich der axialen Durchlässe 8b eine die Durchlässe untereinander verbindende Ringnut 8d auf. In
einem ersten, im Gehäuse 1 vorgesehenen Zylinderraum 7, der mit dem zentralen Zuflußkanal 9 in
Verbindung steht, ist der innere Gleitringträger 10
axial verschiebbar angeordnet und drehfest gehalten. Dieser Gleitringträger 10 trägt an seinem einen
Ende den zentralen Gleitring 11, der mit einer
zentralen Bohrung 11a versehen ist. In einem zweiten Zylinderraum 12, der konzentrisch zu dem ersten Zylinderraum 7 angeordnet ist, ist der äußere
Gleitringträger ebenfalls axial verschiebbar und
drehfest gelagert. Der zweite Gleitringträger 13
trägt den zum zentralen Gleitring 11 konzentrischen Gleitring 14. Der konzentrische Gleitring 14
ist mit mehreren auf einem zur Drehachse konzentrischen Kreis angeordneten axialen Durchlässen
14a versehen. Diese Durchlässe 14a stehen über
einen Ringkanal 15 und mehrere Axialbohrungen
16 mit dem zweiten Zylinderraum 12 in Verbindung. In diesen mündet der zweite Zuflußkanal 17.
Die beiden Gleitringträger 10 und 13 sind kolbenartig ausgebildet und gegenüber ihren zugehörigen
Zylinderräumen 7 und 12 abgedichtet.

Zwischen dem äußeren Umfang des zentralen
Gleitringes 11 und dem inneren Umfang des konzentrischen Gleitringes 14 ist ein Ringraum 18 vorgesehen, der bis zur Gleitfläche 8c des gemeinsamen Gleitringes 8 reicht. Der äußere Gleitringträger
13 weist ferner einen, in einem dritten Zylinder
raum 19, der konzentrisch zwischen den beiden
anderen Zylinderräumen 7, 12 angeordnet ist, verschiebbaren Ringkolben auf. Zwischen dem inneren Umfang des äußeren Gleitringträgers 13, seines Ringkolbens 20 und dem inneren Gleitringträger 10, sowie einem seinen Zylinderraum 7 umschliessenden Gehäuseabschnitt 21, ist ein zweiter
Ringraum 22 gebildet, der die Verbindung zwischen dem ersten Ringraum 18 und dem dritten
Zylinderraum 19 herstellt. Der dritte Zylinderraum
19 steht mit einem dritten Zuflußkanal 23 und einem Abflußkanal 24 in Verbindung. Mittels der auf
den inneren Gleitringträger 10 und den Ringkolben
20 einwirkenden Federn 25, 26 werden die beiden
Gleitringe 11 und 14 an die Gleitfläche 8c des
gemeinsamen Gleitringes 8 mit einer Grundbelastung angedrückt.

Die Gleitringe 8, 11, 14 können aus den üblichen Gleitring-Werkstoffen bzw. Werkstoffpaarungen bestehen. Für hohe Drehzahlen ist es vorteilhaft, wenn die Gleitringe 8, 11, 14 aus Siliziumkarbid bestehen. Da dieses Material eine hohe Druckfestigkeit, jedoch eine geringe Zugfestigkeit aufweist, ist es vorteilhaft, wenn die Gleitringträger 10,
13 die ihnen zugeordneten Gleitringe 11, 14 und
die Hohlwelle 2 bzw. das mit ihr drehfest verbundene Teil 2a den gemeinsamen Gleitring 8 radial von
außen mit Vorspannung umgeben. Die Gleitringe
sind mit Schrumpfsitz in den Gleitringträgern bzw.
der Hohlwelle oder der mit ihr verbundenen Teil 2a
angeordnet, wodurch nicht nur eine drehfeste und dichte Verbindung zwischen den Gleitringen und den ihnen zugeordneten Trägern erreicht wird, sondern auch eine radial einwärts gerichtete Druckkraft auf die Gleitringe ausgeübt wird. Diese radiale Vorspannung verhindert bei hohen Drehzahlen ein Auseinanderbrechen der Gleitringe unter Fliehkraft.

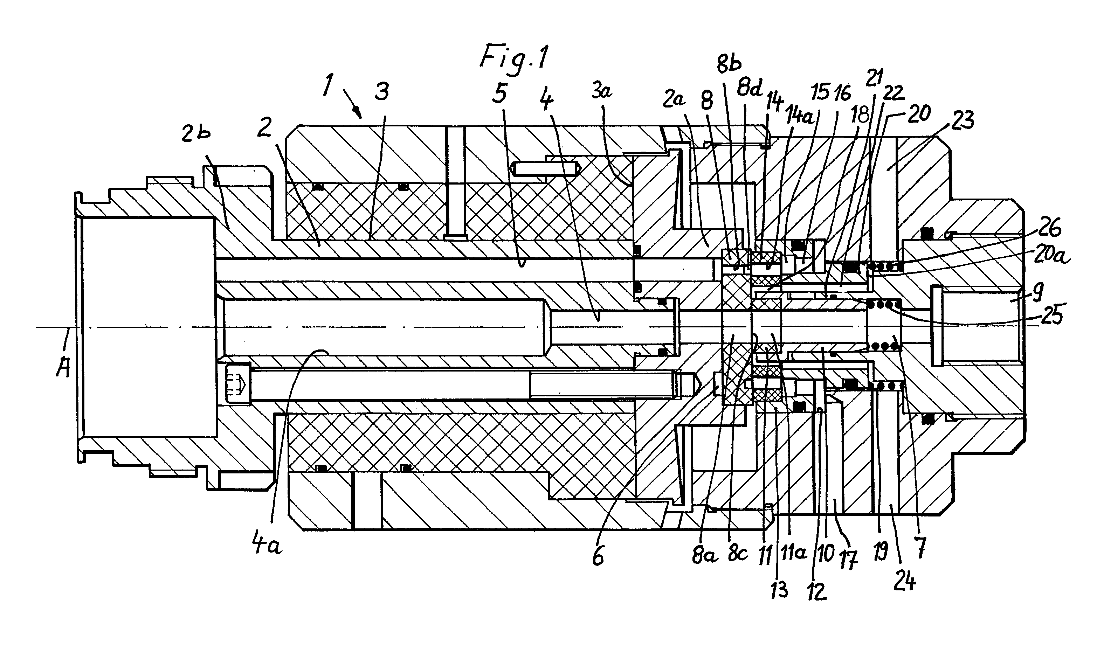

Bei genauer Betrachtung der Figur 1 stellt man fest, daß die aerostatische Lagerung nur ein einziges Axiallager 3a aufweist, welches die Hohlwelle gegen Verschiebung nach links abstützt. Das in entgegengesetzter axialer Richtung zu dem Axiallager 3a wirkende Axiallager wird vorteilhaft durch die Gleitringe 8, 11, 14 gebildet.

Wird die Drehdurchführung zusammen mit einer Werkzeugmaschinenspindel verwendet, dann rotiert die Hohlwelle 2 zusammen mit der Werkzeugmaschinenspindel und das Gehäuse 1 ist stationär angeordnet. Während der Rotation der Werkzeugmaschinenspindel kann über den zentralen Zuflußkanal 9, den Gleitringträger 10, die Bohrungen 8a und 11a der Gleitringe 8 und 11 dem zentralen Durchflußkanal 4 ein erstes Fluid der in die Erweiterung 45 eingreifenden Zugstange zugeführt werden. Bei diesem Fluid kann es sich um ein für die Zerspanung benötigtes Kühlschmiermittel, Tiefbohröl, Schneidöl, Wasser oder auch Druckluft handeln. Wenn es sich um Kühlschmiermittel, Schneidöl, Tiefbohröl oder Wasser handelt und dieses in größerer Menge hindurchgeführt wird, dann werden die Gleitringe 8, 11 auch ausreichend gekühlt und geschmiert. Wenn jedoch ein geringer Durchsatz vorhanden ist, das Fluid drucklos ist, trocken mit oder ohne Druckluftzuführung gearbeitet werden soll, dann ist die Kühlung und Schmierung der Gleitringe 8, 11 ungenügend und diese würden bei hohen Drehzahlen rasch zerstört werden. Aus diesem Grund wird über den dritten Zuflußkanal 23 ein flüssiges Kühlmittel, beispielsweise Kühlschmiermittel, zugeführt, welches über den dritten Zylinderraum 19, den zweiten Ringraum 22 in den ersten Ringraum 18 gelangt. Dort kommt es direkt mit den Gleitringen 8, 11, 14 bzw. auch dem inneren Gleitringträger 10 in Berührung. Hierdurch werden die Gleitringe 8, 11, 14 intensiv gekühlt und ihre Gleitflächen auch geschmiert. Nachdem das Kühlmittel die Wärme aufgenommen hat, fließt es über den Ringraum 22 und den Zylinderraum 19 in den Abflußkanal 24.

Über den zweiten Zuflußkanal 17, den Zylinderraum 12, die Axialbohrungen 16, die Durchlässe 8d und 8b kann den Durchflußkanälen 5 ein zweites Fluid sowohl während der Rotation der Kohlwelle 2 als auch bei Stillstand zugeführt werden. Bei einer Werkzeugmaschinenspindel mit Werkzeugspanner erfolgt die Zufuhr von Hydrauliköl zu der Löseeinheit während des Stillstandes der Werkzeugmaschinenspindel und der Kohlwelle 2. Während der Rotation dieser Teile fließt hingegen kein Hydrauliköl und infolgedessen könnte bei hohen Drehzahlen die Kühlung des konzentrischen Gleitringes 14 ungenügend sein. Dank der zusätzlichen Kühlung mittels des durch den Ringraum 18 geleiteten Kühlschmiermittels wird jedoch in jedem Betriebszustand eine ausreichende Kühlung aller Gleitringe sichergestellt. Der Ringraum 18 sorgt ferner für die Ableitung von Kühlschmiermittel bzw. auch Hydrauliköl, welches u.U. an den Gleitflächen des zentralen Gleitringes 11 bzw. des konzentrischen Gleitringes 14 austritt. Es wird damit insbesondere das Eindringen von Kühlschmiermittel in den Hydraulikkreislauf verhindert.

Das durch den Zuflußkanal 23 in den dritten Zylinderraum 19 eingeleitete Kühlschmiermittel wirkt auch auf die dem Gleitring 14 abgewandte Ringkolbenfläche 20a. Durch den Druck des Kühlschmiermittels im Zylinderrahmen 19 kann somit die Anpreßkraft des Gleitringes 14 an die Gleitfläche 8c gesteuert und verschiedenen Betriebszuständen angepaßt werden.

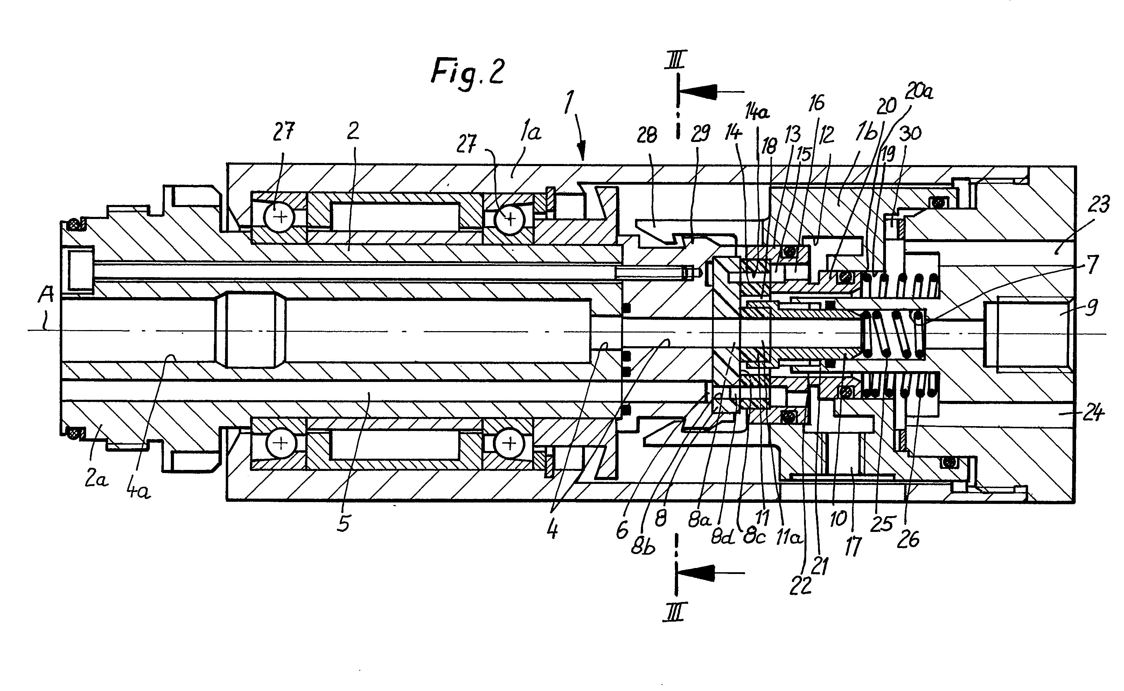

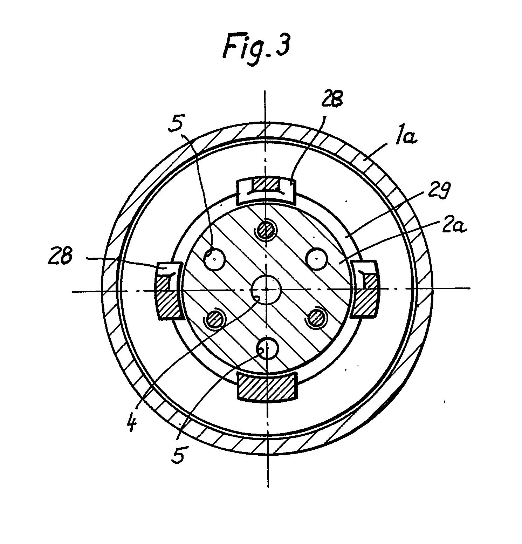

Das in Figur 2 und 3 dargestellte Ausführungsbeispiel stimmt weitgehend mit dem in Figur 1 dargestellten Ausführungsbeispiel überein. Teile gleicher Funktion sind deshalb mit den gleichen Bezugszeichen bezeichnet und die obige Beschreibung trifft sinngemäß auch auf das in Figur 2 und 3 dargestellte Ausführungsbeispiel zu.

Anstelle der aerostatischen Lager sind bei dem in Figur 2 und 3 dargestellten Ausführungsbeispiel zwei Wälzlager 27 zur Lagerung der Hohlwelle 2 vorgesehen. Diese beiden Wälzlager wären einer sehr hohen statischen Axialbelastung ausgesetzt, wenn der Löseeinheit über die Durchlaßkanäle 5 Hydrauliköl unter hohem Druck zugeführt wird. Der Druck kann hierbei bis zu 200 bar betragen. Dieser Druck wirkt auch in dem zweiten Zylinderraum 12 auf den kolbenartig ausgebildeten Gleitringträger 13 und preßt den konzentrischen Gleitring 14 an den gemeinsamen Gleitring 8. Die hohe Anpreßkraft ist erforderlich, damit an den Gleitflächen der Gleitringe 8, 14 kein Hydrauliköl austritt. Gleichzeitig würde die durch die hohe Anpreßkraft bedingte große Axialkraft eine statische Überbelastung der Wälzlager 27 hervorrufen. Um dies zu verhindern, besteht bei dem in Figur 2 und 3 dargestellten Ausführungsbeispiel das Gehäuse 1 aus den Gehäuseteilen 1a und 1b. Das Gehäuse 1a ist zwar seinerseits auch aus zwei Teilen gebildet, jedoch sind diese fest miteinander verschraubt, so daß sie eine in sich geschlossene Einheit bilden und deshalb als erstes Gehäuseteil 1a bezeichnet sind. Das zweite Gehäuseteil 1b ist gegenüber dem ersten Gehäuseteil 1a axial verschiebbar. In dem zweiten Gehäuseteil 1b ist der äußere Gleitringträger 13 axial verschiebbar. Das zweite Gehäuseteil enthält auch den zweiten Zylinderraum 12 und den zweiten Zuflußkanal 17. Außerdem sind im zweiten Gehäuseteil 1b der Ringkolben 20 und sein zugehöriger Zylinderraum 19 vorgesehen. An dem zweiten Gehäuseteil 1b sind ferner vier Klauen 28 vorgesehen, die einen am inneren Ende 2a der Hohlwelle 2 vorgesehenen, im wesentlichen radialen Ringbund hintergreifen. Zwischen den beiden Gehäuseteilen 1b und 1a ist ferner eine axial wirkende Federanordnung vorgesehen, welche das zweite Gehäuseteil 1b in Richtung zum inneren Ende 2a der Hohlwelle belastet. Aus herstellungstechnischen Gründen bildet das innere Ende 2a ein separates Teil, welches mit der Hohlwelle 2 fest verschraubt und gegenüber der Hohlwelle auch abgedichtet ist.

Wenn während der Rotation der Werkzeugmaschinenspindel im Zylinderraum 12 kein oder nur ein geringer Druck herrscht, dann drückt die Federanordnung 30 das zweite Gehäuseteil 1b nach links, wodurch die Klauen 28 in axialem Abstand von dem Ringbund 29 gehalten werden. Das freie Ende 2a und der Ringbund 29 können sich also gegenüber den Klauen 28 ungehindert drehen. wird jedoch bei Stillstand der Werkzeugmaschinenspindel zum Betätigen der Löseeinheit der Druck im Zylinderraum 12 erhöht, dann verschiebt dieser Druck das Gehäuseteil 1b entgegen der Kraft der Federanordnung 30 so lange nach rechts, bis die Klauen 28 an dem Ringbund 29 zur Anlage kommen. Der konzentrische Gleitring 14 wird zwar dann ebenfalls mit hohem Anpreßdruck an den gemeinsamen Gleitring 8 angepreßt, jedoch wirkt sich dieser hohe Anpreßdruck nicht auf die Wälzlager 27 aus, da er vorher von den Klauen 28 aufgefangen wird. Während die Klauen 28 am Ringbund 29 anliegen, bildet das innere Ende 2a der Kohlwelle 2 und das axial verschiebbare zweite Gehäuseteil lb ein in sich geschlossenes System. Nach Aufhebung des hohen Druckes im Zylinderraum 12 kehren die Teile wieder in ihre in Figur 2, oben, dargestellte Lage zurück.

## Ansprüche

1. Drehdurchführung für zwei unterschiedliche Fluide, insbesondere für Werkzeugmaschinen, mit einem feststehenden Gehäuse, mit einer darin drehbar gelagerten, einen zentralen Durchflußkanal für das erste Fluid und mindestens Seinen hierzu parallelen zweiten Durchflußkanal für das zweite Fluid aufweisenden Hohlwelle, mit zwei im Gehäuse vorgesehenen, getrennten Zuflußkanälen für die beiden Fluide und mit einer zwischen diesen und der Hohlwelle vorgesehenen, koaxial zur Drehachse angeordneten Gleitringdichtungsanordnung, über welche die Fluide den Durchgangskanälen getrennt zuführbar sind, wobei die Gleitringdichtungsanordnung einen mit dem inneren Ende der Hohlwelle stirnseitig verbundenen, für die Durchleitung beider Fluide gemeinsamen Gleitring der eine zentrale Bohrung und mehrere, auf einem zur Drehachse konzentrischen Kreis angeordnete, axiale Durchlässe aufweist, und in dem Gehäuse einen zentralen Gleitring, sowie einen diesen konzentrisch umgebenden Gleitring umfaßt, die je in im Gehäuse in zugeordneten Zylinderräumen axial verschiebbaren, drehfest gehaltenen, kolbenartig ausgebildeten, zueinander konzentrischen Gleitringträgern gehalten sind und unabhängig voneinander unter Federdruck sowie dem Druck des jeweiligen Fluids axial an die Gleitfläche des gemeinsamen Gleitringes andrückbar sind, **dadurch gekennzeichnet, daß** der konzentrische Gleitring (14) mehrere, auf einem zur Drehachse (A) konzentrischen Kreis angeordnete axiale Durchlässe (14a) aufweist, die über den Zylinderraum (12) des den konzentrischen Gleitring (14) tragenden äußeren Gleitringträgers (13) mit dem Zuflußkanal (17) für das zweite Fluid verbunden sind, daß der gemeinsame Gleitring (8) und/oder der konzentrische Gleitring (14) im Bereich der axialen Durchlässe (8b, 14a) in der jeweiligen Gleitfläche (8c) mit einer die Durchlässe untereinander verbindenden Ringnut (8d) versehen ist, daß zwischen dem äußeren Umfang des zentralen Gleitringes (11) und dem inneren Umfang des konzentrischen Gleitringes (14) ein bis zu der Gleitfläche (8c) des gemeinsamen Gleitringes (8) reichender Ringraum (18) vorgesehen ist, daß der äußere Gleitringträger (13) einen in einem dritten Zylinderraum (19) des Gehäuses (1, 1b) verschiebbaren Ringkolben (20) aufweist, daß der Ringraum (18) mit dem dritten Zylinderraum (19) verbunden ist und daß in dem Gehäuse (1, 1b) ein dritter Zuflußkanal (23) und ein Abflußkanal (24) vorgesehen sind, die mit dem dritten Zylinderraum (19) verbunden sind.

2. Drehdurchführung nach Anspruch 1, **dadurch gekennzeichnet, daß** der dritte Zylinderraum (19) konzentrisch zwischen den beiden anderen Zylinderräumen (7, 12) angeordnet ist.

3. Drehdurchführung nach Anspruch 1 oder 2, **dadurch gekennzeichnet, daß** zwischen dem inneren Umfang des äußeren Gleitringträgers (13), seines Ringkolbens (20) sowie dem äußeren Umfang des inneren Gleitringträgers (10) und eines seinen Zylinderraum (7) umschließenden Gehäuseabschnitts (21) ein zweiter Ringraum (22) gebildet ist, der die Verbindung zwischen dem ersten Ringraum (18) und dem dritten Zylinderraum (19) bildet.

4. Drehdurchführung nach Anspruch 1, **dadurch gekennzeichnet, daß** die Gleitringträger (10, 13) die ihnen zugeordneten Gleitringe (11, 14) radial von außen mit Vorspannung umgeben.

5. Drehdurchführung nach Anspruch 1, **dadurch gekennzeichnet, daß** die Hohlwelle (2) bzw. ein mit ihr drehfest verbundenes Teil (2a) den gemeinsamen Gleitring (8) radial von außen mit Vorspannung umgibt.

6. Drehdurchführung nach Anspruch 1, 4 oder 5, **dadurch gekennzeichnet,** daß alle Gleitringe (8, 11, 14) aus Siliziumkarbid bestehen.

7. Drehdurchführung nach Anspruch 1, **dadurch gekennzeichnet,** daß auf die dem konzentrischen Gleitring (14) abgewandte Ringkolbenfläche (20a) eine Druckfeder (25) einwirkt.

8. Drehdurchführung nach mindestens einem der Ansprüche 1 - 7, **dadurch gekennzeichnet,** daß das Gehäuse (1) mindestens aus zwei Gehäuseteilen (1a, 1b) besteht, von denen das erste die Lagerung (27) der Hohlwelle (2) enthält und das zweite die Gleitringdichtungsanordnung (8, 11, 14) umschließt, daß das zweite Gehäuseteil (1b) gegenüber dem ersten Gehäuseteil (1a) axial verschiebbar ist, daß in dem zweiten Gehäuseteil (1b) der äußere Gleitringträger (13) axial verschiebbar, daß in dem zweiten Gehäuseteil (1b) der zweite Zuflußkanal (17) vorgesehen ist und mit dem Zylinderraum (12) des äußeren Gleitringträgers (13) verbunden ist, daß an dem zweiten Gehäuseteil (1b) mehrere Klauen (28) vorgesehen sind, die einen im wesentlichen radialen Ringbund (29) am inneren Ende (2a) der Hohlwelle (2) hintergreifen und daß zwischen beiden Gehäuseteilen (1a, 1b) eine axial wirkende Federanordnung (30) vorgesehen ist, welche das zweite Gehäuseteil (1b) in Richtung zum inneren Ende (2a) der Hohlwelle (2) belastet und bei drucklosem Zylinderraum (12) die Klauen (28) in axialem Abstand von dem Ringbund (29) hält.

9. Drehdurchführung nach Anspruch 1, dadurch gekennzeichnet, daß zur Lagerung der Hohlwelle (2) im Gehäuse (1) eine aerostatische Lagerung (3, 3a) mit nur einem Axiallager (3a) vorgesehen ist und daß das in entgegengesetzter axialer Richtung zu diesem wirkende Axiallager durch die Gleitringe (8, 11, 14) gebildet ist.

Fig.1

Fig.2

EP 0 368 024 A2

Fig.3